# EUROPÄISCHE PATENTSCHRIFT

(11) **EP 1 862 770 B1**
(45) Veröffentlichungstag und Bekanntmachung des Hinweises auf die Patenterteilung: **11.02.2009**
(21) Anmeldenummer: 07405116.0
(22) Anmeldetag: 12.04.2007
(51) Int. Cl.: G01D 5/14, G01B 7/00, H01H 36/00

(54) **Set mit einem Positionssensor und einem Erregerteil**
Set with a positioning sensor and an exciter part
Kit doté d'un capteur de position et d'une partie d'excitation

(30) Priorität: 01.06.2006 CH 8792006
(43) Veröffentlichungstag der Anmeldung: 05.12.2007
(73) Patentinhaber: Pilz Auslandsbeteiligungen GmbH, 73760 Ostfildern (DE)
(72) Erfinder: Schmid, Max, 7323 Wangs (CH); Mahdi, Fouad, 7402 Bonaduz (CH)
(74) Vertreter: Riederer, Conrad A.

(56) Entgegenhaltungen:
- US-A- 3 247 343
- US-A- 5 668 533
- US-A1- 2003 052 780

## Beschreibung

Die Erfindung betrifft einen Positionssensor mit einem magnetischen Erregerteil zum aktivieren des Sensors, wobei Sensor und Erregerteil baulich aufeinander abgestimmt sind.

Eine Aufgabe der Erfindung besteht darin, einen Positionssensor zu schaffen, der durch Annäherung an ein magnetisches Erregerteil aktiviert werden kann, jedoch durch Fremdmagnetfelder nicht aktivierbar ist. Der Sensor soll überdies sehr einfach gebaut sein.

Diese Aufgabe wird erfindungsgemäss gelöst durch die Merkmale des Anspruch 1.

Bei einem Satz mit einem Positionssensor und einem Erregerteil weist der Positionssensor drei parallel zu einander ausgerichtete Reedkontakte in einer Dreiecksanordnung nebeneinander auf. Der erste Reedkontakt und der dritte Reedkontakt sind entweder in Serie oder parallel geschaltet. Sind sie in Serie geschaltet, so ist der erste Reedkontakt ein Schliesser und der dritte Reedkontakt ein Öffner. Sind sie parallel geschaltet, so ist der erste Reedkontakt ein Öffner und der dritte Reedkontakt ein Schliesser. Der zweite Reedkontakt kann bei beiden Varianten ein Öffner oder ein Schliesser sein. Das Erregerteil ist mit drei in einer der Dreiecksanordnung der Reedkontakte entsprechenden Dreieckanordnung angeordneten Stabmagneten ausgerüstet. Die Nord-Süd-Achsen dieser Stabmagnete sind parallel ausgerichtet. Von diesen Stabmagneten sind zwei erste Magnete gleich gerichtet und im ersten Abstand zueinander angeordnet. Der dritte Magnet in der zu den ersten beiden entgegengesetzten Richtung gepolt ist. Es ist also möglich, die ersten zwei mit Nord gegen die Reedkontakte gerichtet anzuordnen, dann ist der dritte mit Süd in diese Richtung angeordnet. Oder es ist umgekehrt möglich, die ersten zwei Magnete mit ihrem Südpol in die Richtung der Reedkontakte des Positionssensors anzuordnen. In diesem Fall ist der dritte Stabmagnet mit seinem Nordpol in diese Richtung gerichtet.

Diese Anordnung von drei Magneten in einer Dreiecksanordnung, die der Dreiecksanordnung von drei parallel ausgerichteten Reedkontakten entspricht, erlaubt mit den Magneten die beiden ersten Reedkontakte zu schalten, ohne den dritten Reedkontakt ebenfalls zu schalten. Dies deshalb, weil der entgegengesetzt gerichtete Pol des dritten Magneten die Magnetfelder der beiden ersten Magnete so verzerrt, dass der dritte Reedkontakt in Gegenüberstellung zu den Magneten nicht aktiviert wird, die beiden ersten jedoch aktiviert werden.

Eine Annäherung von Erregerteil und Positionssensor kann in axialer Richtung der Magnetpolachsen erfolgen. Sie kann auch senkrecht dazu erfolgen in einer Richtung von den ersten zum dritten Reedkontakt oder von den ersten zum dritten Stabmagneten, bzw. umgekehrt. Eine Bewegung des Erregerteils in Richtung vom ersten zum zweiten Magneten oder umgekehrt führt indes zu nicht eindeutigen Sensorsignalen. Diese Bewegungsrichtung führt genauer gesagt dazu, dass die beiden ersten Reedkontakte nacheinander aktiviert werden, und dass vor einer Aktivierung der beiden ersten Reedkontakte der dritte Reedkontakt über einen kurzen Weg ebenfalls aktiviert wird. Bei den anderen Bewegungsrichtungen jedoch werden beide ersten Reedkontakte zusammen aktiviert, ohne dass der dritte aktiviert wird. Dieses Muster ist, im Gegensatz zum anderen, geeignet für einen Sicherheits-Positionssensor.

Der dritte Magnet und der dritte Reedkontakt sind zweckmässigerweise so angeordnet und ausgelegt, dass der dritte Magnet mit einem geringeren Magnetfeld auf den dritten Reedkontakt wirkt als die beiden ersten Magnete auf die beiden ersten Reedkontakte. Dies hat den Vorteil, dass der Einfluss der ersten beiden Magnete auf die beiden ersten Reedkontakte nur wenig beeinflusst wird durch den dritten Magneten. Der geringere Einfluss reicht dennoch aus, den dritten Reedkontakt zu schützen vor einem diesen aktivierenden Magnetfeld der beiden ersten Stabmagnete.

Ein solcher reduzierter Einfluss des dritten Magneten kann dadurch erreicht werden, dass der dritte Magnet ein geringeres Magnetfeld hat, also weniger stark ist als jedes der ersten beiden Magnete. Es kann aber auch dadurch erreicht werden, dass der Abstand zwischen dem dritten Magneten und dem dritten Reedkontakt grösser ist als der Abstand zwischen dem ersten Magneten und dem ersten Reedkontakt, bzw. dem zweiten Magneten und dem zweiten Reedkontakt. Der Abstand der ersten beiden Magnete zu dem jeweils gegenüberliegenden Reedkontakt ist möglichst identisch.

Ein solcher grösserer Abstand kann dadurch erreicht werden, dass im Positionssensor der dritte Reedkontakt gegenüber den ersten beiden Reedkontakten versetzt angeordnet ist, oder dass im Erregerteil der dritte Magnet gegenüber den ersten beiden Magneten versetzt angeordnet ist.

Um mit dem dritten Reedkontakt eine Manipulation, d.h. ein Aktivieren des Sensors durch Fremdmagnetfelder zu vereiteln, ist der dritte Reedkontakt in Serie mit dem ersten Reedkontakt geschaltet. Ein Fremdmagnetfeld wird in jedem Fall alle Reedschalter aktivieren. Da der erste und der dritte Reedkontakt einander entgegengesetzt schalten, wird durch ein fremdes Magnetfeld nie erreicht werden können, dass der erste und der zweite Reedschalter geschlossen sind. Eine an den Sensor angeschlossene logische Schaltung wird ein durch ein Fremdmagnetfeld erzeugtes Signal als Fehlersignal verstehen, da die elektrische Verbindung durch den ersten und den dritten Reedkontakt hindurch unterbrochen ist, während die Verbindung durch den zweiten Reedkontakt hindurch hergestellt ist.

Die drei Reedkontakte sind zweckmässigerweise zusammen in einem Sensorkörper eingegossen.

Kurzbeschreibung der Figuren:
- Fig. 1: zeigt eine perspektivische Skizze eines solchen Sets.
- Fig. 2: zeigt eine Ansicht des Sensors in axialer Richtung der Reedkontakte.
- Fig. 3: zeigt eine Ansicht auf die drei Stabmagnete.
- Fig. 4: zeigt eine Seitenansicht eines zweiten Ausführungsbeispiels mit abgestuft angeordneten Reedkontakten im Sensor und Erregerteil.
- Fig. 5: zeigt eine Seitenansicht eines dritten Ausführungsbeispiels mit im Sensor und abgestuft angeordneten Magneten im Erregerteil.
- Fig. 6: zeigt vier mögliche Schemen für die Schaltung der drei Reedkontakte.

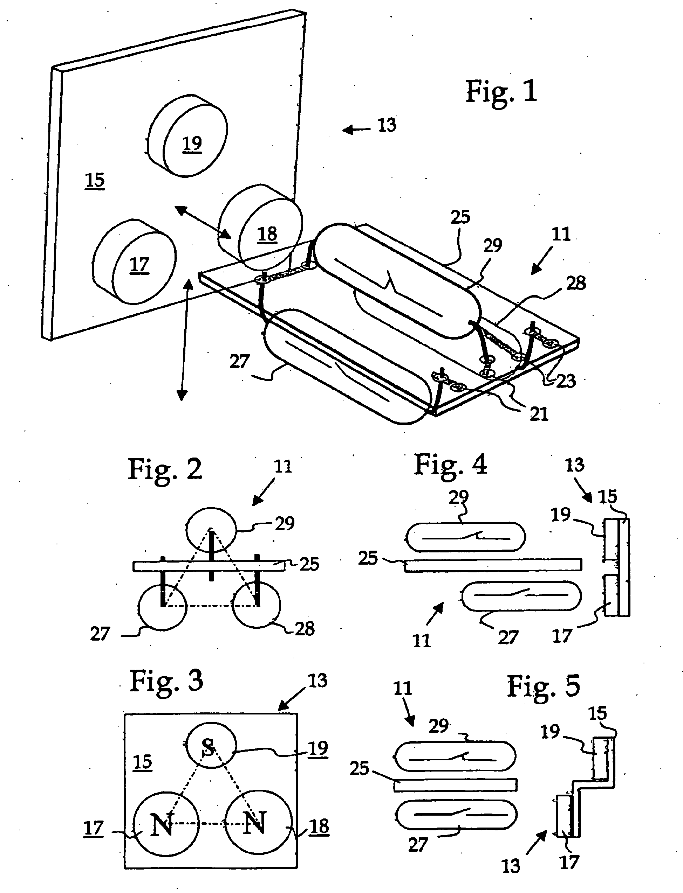

Das in Figur 1, 2 und 3 dargestellte Set besitzt einen Sensor 11 und ein Erregerteil 13. Das Erregerteil besteht aus einer Grundplatte 15 und drei Stabmagneten 17,18,19 darauf. Die Stabmagnete 17,18,19 sind einer Dreiecksanordnung angeordnet. Die beiden grösseren Stabmagnete 17 und 18 sind mit ihrem Nordpol zum Sensor 11 hin gerichtet. Der kleinere dritte Stabmagnet 19 ist schwächer als die beiden ersten und ist mit dem Südpol zum Sensor hin gerichtet.

Die drei Stabmagnete sind auf die Grundplatte aufgesetzt dargestellt. Sie können auch in eine Grundplatte 15 eingelassen sein.

Der Sensor 11 besteht im Wesentlichen aus den drei Reedkontakten 27,28,29, die für ihre ordnungsgemässe Aktivierung in eine Stellung gemäss Figur 1 zum Erregerteil 13 gebracht werden müssen. Die Reedkontakte sind in einer Dreiecksanordung angeordnet. Die Achse der Reedkontakte verlaufen durch die drei Ecken eines im vorliegenden Fall gleichseitigen Dreiecks. Es ist allgemeiner ausgedrückt ein gleichschenkliges Dreieck, wobei die Achse des dritten Reedkontakts 29 durch die Ecke verläuft, in der die beiden gleichen Schenkel zusammenkommen. Die drei Reedkontakte sind auf einer Platine 25 angeordnet, die Anschlüsse 21,23 für Anschlusskabel aufweist. Der erste und der zweite Reedkontakt 27,28 sind Schliesser. Der dritte Reedkontakt 29 ist ein Öffner (Die umgekehrte Ausbildung mit zwei ersten Reedkontakten als Öffner und dem dritten Reedkontakt als Schliesser ist ebenso möglich). Der erste Reedkontakt 27 und der dritte Reedkontakt 29 sind über die Leiterbahnen auf der Platine 25 in Serie geschaltet. Die Leitung zwischen den Anschlüssen 21 sind dann verbunden, wenn der erste Reedkontakt 27 durch das Magnetfeld des ersten Magneten 17 aktiviert ist, der dritte Reedkontakt jedoch nicht aktiviert ist. Der zweite Reedkontakt 28 ist parallel zum ersten angeordnet. Er ist daher immer gleichzeitig mit diesem geöffnet oder geschlossen. Die Anschlüsse 23 sind dann miteinander verbunden, wenn der zweite Reedkontakt 28 aktiviert ist.

Das in Figur 2 und 3 strichpunktiert eingezeichnete gleichseitige Dreieck verdeutlicht, dass die beiden Dreiecksanordnungen von Reedkontakten und Magneten eines erfindungsgemässen Set gleich ausgebildet sind.

In Figur 4 ist eine zweite Ausführungsvariante dargestellt, bei der der dritte Reedkontakt gegenüber den ersten beiden Reedkontakten in Längsrichtung verschoben auf der Platine 25 angeordnet ist. Er wird daher weniger stark beeinflusst von den Magneten 17,18,19. Das Magnetfeld der ersten beiden Magnete 17,18 ist durch den umgekehrt gepolten dritten Magneten 19 zudem abgeschwächt. Daher wird der dritte Reedkontakt nicht geschaltet durch die Annäherung des Erregerteils 13.

In Figur 5 ist eine dritte Ausführungsvariante dargestellt, bei welcher der dritte Magnet 19 gegenüber den ersten beiden Magneten 17,18 zurückversetzt auf der Grundplatte 15 angeordnet ist. Dies hat praktisch den gleichen Effekt.

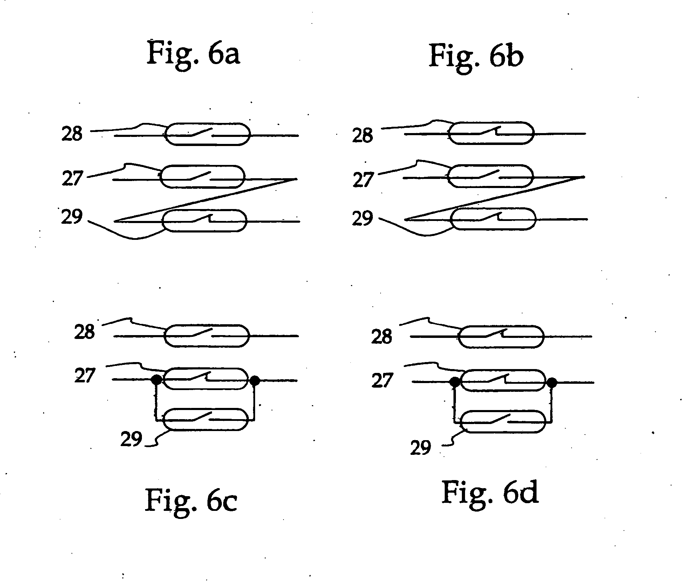

In Figur 6 sind vier Schaltschemen dargestellt, bei denen die drei Reedkontakte 27, 28, 29 zu zwei Leiterbahnen zusammengefasst sind und drei unterscheidbare Schaltmuster aufweisen können. Abgesehen von diesen Schaltschemen ist es auch möglich, die drei Reedkontakte einzeln abzugreifen und mit einer nachgeschalteten Logik den Schaltzustand des Sensors zu analysieren.

In Figuren 6a und 6b sind jeweils der erste Reedkontakt 27 und der dritte Reedkontakt 29 in Serie geschaltet. Bei der Serieschaltung ist es erforderlich, dass der erste Reedkontakt ein Schliesser und der dritte ein Öffner ist, um ein eindeutiges Sensorsignal zu erhalten. Der zweite Reedkontakt kann ein Öffner (Fig. 6b) oder ein Schliesser (Fig. 6a) sein.

In den Figuren 6c und 6d sind der erste Reedkontakt 27 und dritte Reedkontakt 29 parallel geschaltet. Dies erfordert, dass der erste Reedkontakt 27 ein Öffner ist und der dritte Reedkontakt 29 ein Schliesser ist, damit eindeutige Sensorsignale generiert werden. Der zweite Reedkontakt kann dabei wieder ein Öffner oder ein Schliesser sein.

Der Zustand der Reedkontakte wird mit einer logischen Schaltung (vorzugsweise mit einem Elektronikbauteil) analysiert. Bei den angeführten Schaltungen gilt folgendes:

| Schema | 6a | | 6b | | 6c | | 6d | |
|---|---|---|---|---|---|---|---|---|
| Reedkontakte | 27/29 | 28 | 27/29 | 28 | 27/29 | 28 | 27/29 | 28 |
| Aktiviert durch Erregerteil | 1 | 1 | 1 | 0 | 0 | 1 | 0 | 0 |
| Nicht aktiviert | 0 | 0 | 0 | 1 | 1 | 0 | 1 | 1 |
| Aktiviert durch Fremdmagnetfeld | 0 | 1 | 0 | 0 | 1 | 1 | 1 | 0 |

Sind die Reedkontakte einzeln abgegriffen, kann jeder Reedkontakt unabhängig vom andern ein Öffner oder ein Schliesser sein. Die logische Schaltung muss entsprechend so ausgelegt sein, dass die Offenstellung und Geschlossenstellung der einzelnen Reedkontakte richtig interpretiert werden.

Zusammengefasst gesagt geht es bei der Erfindung um ein Set mit einem Positionssensor 11 und einem Erregerteil 13. Der Positionssensor 11 weist drei parallel zu einander ausgerichtete Reedkontakte 27,28,29 in einer Dreiecksanordnung nebeneinander auf, von denen zwei erste Reedkontakte 27,28 der doppelten Erfassung des Magnetfelds des Erregerteils dienen. Sie sind in einem ersten Abstand von einander angeordnet. Der dritte Reedkontakt 29 dient der Generierung eines Fehlersignals, falls ein Fremdmagnetfeld auf die Reedkontakte wirkt. Das Erregerteil 13 weist drei in einer entsprechenden Dreieckanordnung angeordnete Stabmagnete 17,18,19 auf, deren Nord-Süd-Achsen parallel ausgerichtet sind. Von diesen sind zwei erste Magnete 17,18 gleich gepolt und im ersten Abstand zueinander angeordnet. Der dritte Magnet 19 ist in der zu den ersten beiden entgegengesetzten Richtung gepolt. Dadurch wird erreicht, dass durch die beiden gleich gerichteten Stabmagnete 17,18 lediglich die beiden ersten Reedkontakte 27,28 aktiviert werden können. Durch ein Fremdmagnetfeld hingegen werden jeweils alle drei Reedschalter 27,28,29 betätigt. Dadurch ist ein manipuliersicherer Näherungssensor erreicht.

## Patentansprüche

1. Set mit einem Positionssensor (11) und einem Erregerteil (13), bei dem der Positionssensor (11) drei parallel zu einander ausgerichtete Reedkontakte (27,28,29) in einer Dreiecksanordnung nebeneinander aufweist, von denen
- zwei erste Reedkontakte (27,28) in einem ersten Abstand von einander angeordnet sind und der doppelten Erfassung des Erreger-Magnetfeldes dienen, und
- der dritte Reedkontakt (29) der Generierung eines Fehlersignals bei einer Aktivierung des dritten Reedkontakts dient,
- und das Erregerteil (13) drei in einer der Dreiecksanordnung der Reedkontakte entsprechenden Dreiecksanordnung angeordnete Permanentmagnete (17,18,19) aufweist, deren Pol-Achsen parallel zu einander ausgerichtet sind, von denen zwei erste Magnete (17,18) gleich gerichtet und im ersten Abstand zueinander angeordnet sind, um in einer aktivierenden Stellung mit dem ersten und dem zweiten Reedkontakt fluchtend ausgerichtet sein zu können, und von denen der dritte Magnet (19) in der zu den ersten beiden Magneten entgegengesetzten Richtung gepolt ist.

2. Set nach Anspruch 1, **dadurch gekennzeichnet, dass** der dritte Magnet (19) und der dritte Reedkontakt (29) so angeordnet und ausgelegt sind, dass der dritte Magnet (19) mit einem geringeren Magnetfeld auf den dritten Reedkontakt (29) wirkt als die beiden ersten Magnete (17,28) auf die beiden ersten Reedkontakte (27,28).

3. Set nach Anspruch 2, **dadurch gekennzeichnet, dass** der dritte Magnet (19) ein geringeres Magnetfeld hat als jedes der beiden ersten Magnete(17,18).

4. Set nach Anspruch 2 oder 3, **dadurch gekennzeichnet, dass** der Abstand zwischen dem dritten Magneten (19) und dem dritten Reedkontakt (29) grösser ist als der Abstand zwischen dem ersten Magneten (17) und dem ersten Reedkontakt (27), bzw. zwischen dem zweiten Magneten (18) und dem zweiten Reedkontakt (28).

5. Set nach einem der Ansprüche 2 bis 4, **dadurch gekennzeichnet, dass** der dritte Reedkontakt (29) gegenüber den ersten beiden Reedkontakten (27,28) in Längsrichtung des Reedkontakts versetzt angeordnet ist.

6. Set nach einem der Ansprüche 2 bis 5, **dadurch gekennzeichnet, dass** der dritte Magnet (19) gegenüber den ersten beiden Magneten (17,18) in Richtung der Pol-Achse versetzt angeordnet ist.

7. Set nach einem der vorangehenden Ansprüche, **dadurch gekennzeichnet, dass** der dritte Reedkontakt (29) ein Öffner ist und in Serie mit dem ersten Reedkontakt (27) geschaltet ist, der ein Schliesser ist.

8. Set nach einem der Ansprüche 1 bis 6, **dadurch gekennzeichnet, dass** der dritte Reedkontakt (29) ein Schliesser ist und parallel mit dem ersten Reedkontakt (27) geschaltet ist, der ein Öffner ist.

9. Set nach einem der vorangehenden Ansprüche, **dadurch gekennzeichnet, dass** die drei Reedkontakte (27,28,29) in einem Sensorkörper eingegossen sind.

10. Set nach einem der vorangehenden Ansprüche, **dadurch gekennzeichnet, dass** die beiden ersten Magnete einander entsprechende Magnetfelder aufweisen.

## Claims

1. Set with a position detector (11) and an excitation part (13) for which the position detector (11) has three Reed contacts (27, 28, 29) aligned parallel to each other side by side in a triangular system, from which two first Reed contacts (27, 28) are placed at a first distance one from another and serve to the double detection of the excitation magnetic field and
- the third Reed contact (29) is used for generating an error signal by an activation of the third Reed contact
- and the excitation part (13) has three permanent magnets (17, 18, 19) placed in a triangular system corresponding to the triangular system of the Reed contacts, magnets the polar axles of which are aligned parallel to each other, from which two first magnets (17, 18) are aligned alike and are placed at a first distance from each other in order to be able to be in a true alignment in an activating position with the first and with the second Reed contact and from which the third magnet (19) is polarized in the direction opposite to the first two magnets.

2. Set according to claim 1, **characterized in that** the third magnet (19) and the third Reed contact (29) are placed and designed in such a manner that the third magnet (19) acts with a lower magnetic field onto the third Reed contact (29) than the two first magnets (17, 28) onto the two first Reed contacts (27, 28).

3. Set according to claim 2, **characterized in that** the third magnet (19) has a lower magnetic field than each of the two first magnets (17, 18).

4. Set according to claim 2 or 3, **characterized in that** the distance between the third magnet (19) and the third Reed contact (29) is bigger than the distance between the first magnet (17) and the first Reed contact (27) or between the second magnet (18) and the second Reed contact (28).

5. Set according to any of the claims 2 to 4, **characterized in that** the third Reed contact (29) is placed offset with respect to the first two Reed contacts (27, 28) in longitudinal direction of the Reed contact.

6. Set according to any of the claims 2 to 5, **characterized in that** the third magnet (19) is placed offset with respect to the first two magnets (17, 18) in direction of the polar axis.

7. Set according to any of the preceding claims, **characterized in that** the third Reed contact (29) is a break contact and is connected in series with the first Reed contact (27) which is a make contact.

8. Set according to any of the claims 1 to 6, **characterized in that** the third Reed contact (29) is a make contact and is connected in parallel with the first Reed contact (27) which is a break contact.

9. Set according to any of the preceding claims, **characterized in that** the three Reed contacts (27, 28, 29) are sealed in a detector body.

10. Set according to any of the preceding claims, **characterized in that** the two first magnets have magnetic fields corresponding to each other.

## Revendications

1. Ensemble avec un détecteur de position (11) et une partie d'excitation (13) pour lequel le détecteur de position (11) présente trois contacts Reed (27, 28, 29), orientés parallèlement l'un par rapport à l'autre, l'un à côté de l'autre dans un arrangement en triangle, parmi lesquels deux premiers contacts Reed (27, 28) sont placés à une première distance l'un de l'autre et servent à la double détection du champ magnétique d'excitation et
- le troisième contact Reed (29) sert à la génération d'un signal d'erreur lors d'une activation du troisième contact Reed
- et la partie d'excitation (13) présente trois aimants permanents (17, 18, 19) placés dans un arrangement en triangle correspondant à l'arrangement en triangle des contacts Reed, aimants permanents dont les axes polaires sont alignés parallèlement l'un à l'autre, parmi lesquels deux premiers aimants (17, 18) sont orientés de la même manière et sont placés à une première distance l'un de l'autre pour pouvoir être alignés précisément dans une position d'activation avec le premier et le second contact Reed et parmi lesquels le troisième aimant (19) est polarisé dans le sens opposé aux deux premiers aimants.

2. Ensemble selon la revendication 1, **caractérisé en ce que** le troisième aimant (19) et le troisième contact Reed (29) sont placés et dimensionnés tels que le troisième aimant (19) agit sur le troisième contact Reed (29) avec un champ magnétique plus faible que les deux premiers aimants (17, 28) sur les deux premiers contacts Reed (27, 28).

3. Ensemble selon la revendication 2, **caractérisé en ce que** le troisième aimant (19) a un champ magnétique plus faible que chacun des deux premiers aimants (17, 18).

4. Ensemble selon la revendication 2 ou 3, **caractérisé en ce que** la distance entre le troisième aimant (19) et le troisième contact Reed (29) est plus grande que la distance entre le premier aimant (17) et le premier contact Reed (27) ou entre le second aimant (18) et le second contact Reed (28).

5. Ensemble selon l'une des revendications 2 à 4, **caractérisé en ce que** le troisième contact Reed (29) est placé décalé dans le sens longitudinal du contact Reed par rapport aux deux premiers contacts Reed (27, 28).

6. Ensemble selon l'une des revendications 2 à 5, **caractérisé en ce que** le troisième aimant (19) est placé décalé dans le sens de l'axe polaire par rapport aux deux premiers aimants (17, 18).

7. Ensemble selon l'une des revendications précédentes, **caractérisé en ce que** le troisième contact Reed (29) est un contact à ouverture qui est monté en série avec le premier contact Reed (27) qui est un contact à fermeture.

8. Ensemble selon l'une des revendications 1 à 6, **caractérisé en ce que** le troisième contact Reed (29) est un contact à fermeture qui est monté en parallèle avec le premier contact Reed (27) qui est un contact à ouverture.

9. Ensemble selon l'une des revendications précédentes, **caractérisé en ce que** les trois contacts Reed (27, 28, 29) sont scellés dans un corps de détecteur.

10. Ensemble selon l'une des revendications précédentes, **caractérisé en ce que** les deux premiers aimants présentent des champs magnétiques qui se correspondent.
